# EUROPEAN PATENT SPECIFICATION

(11) **EP 0 413 734 B1**
(45) Date of publication and mention of the grant of the patent: **18.11.1993**
(21) Application number: 89905410.0
(22) Date of filing: 10.05.1989
(51) Int. Cl.: B29C 65/14

(54) **METHOD AND DEVICE FOR JOINING TOGETHER OF THERMOPLASTIC MATERIALS**
VERFAHREN UND ANORDNUNG ZUM VERBINDEN THERMOPLASTISCHER MATERIALIEN
PROCEDE ET DISPOSITIF D'ASSEMBLAGE DE MATERIAUX THERMOPLASTIQUES

(30) Priority: 13.05.1988 FI 882244
(43) Date of publication of application: 27.02.1991
(73) Proprietor: MEKRAPID, SF-68660 Jakobstad (FI)
(72) Inventor: KJELLMAN, Fredrik, SF-68620 Jakobstad (FI)
(74) Representative: Magnusson, Gustav
(86) International application number: FI8900085
(87) International publication number: WO8910832

(56) References cited:
- DE-A- 1 779 603
- DE-A- 2 749 202
- GB-A- 2 065 025
- GB-A- 2 103 147
- SE-B- 415 080
- US-A- 3 247 041
- US-A- 3 384 526
- US-A- 3 804 691
- Derwent s abstract No. 84016226/03, SU 1004127

## Description

The present invention concerns methods and devices for joining together thermoplastic materials according to the preambles of the independent claims.

The US-A-3,247,041, upon which the preambles of the independent claims are based, discloses a prior art method and an apparatus for heat sealing thermoplastic material by radiant energy. According to this previously known method also overlapping plies of quite transparent thermoplastic material can be joined together, by using a counter piece having a heat absorbent mark such as a pattern of lines. When the overlapping plies are exposed to a remote source of radiant energy these plies will fuse and seal together only opposite the areas of said mark by virtue of heat absorbed thereby from the source. This previously known method can for instance be used for manufacturing of overwraps for food such as poultry, fish and meat cuts. The overwraps are in an empty state during manufacturing, so that the food will be inserted into a finished overwrap.

A prior art method and a device are also disclosed in GB-A-2,103,147. According to this previously known method at least one of the two thermoplastic materials to be joined should be provided with a light-absorbing layer. The device comprises a hood with a transparent window on one side and with reflecting inner wall faces at the other sides, a tungsten-halogen source of light within the hood, and means for relative adjustment of the source of light and of the thermoplastic film so that the radiation penetrates through the light-transmitting layer in one of the thermoplastic materials and melts its light-absorbing layer at the other thermoplastic material, and means for pressing together the two thermoplastic materials during the radiation. In the text it is stated that said method can only be used for joining together of two thermoplastic materials provided that one of the thermoplastic materials absorbs light or is provided with a light-absorbing layer. Two completely transparent thermoplastic materials cannot be joined together by means of the method of said GB-application, and no solution is given for the production of a long continuous joint.

The object of the present invention is to provide an improved method and device for joining together of thermoplastic materials.

According to a first embodiment of the invention a method in connection with wrapping is provided. This method is characterized in that a film-shaped thermoplastic material is tightened around an object to be wrapped and kept fixed during exposure and cooling by means of a shielded support and fixing portion of the contact face of a tool, which portion surrounds the exposure area.

According to another embodiment of the invention a method is provided being characterized in that in joining of a thermoplastic ready-cut box blank to a boxshaped construction, the side walls of the box are folded up into contact with the counter-piece having the shape of a corner, two opposite edges of the side walls are pressed against one another under support of the counter-piece by means of the contact face being of a flexible material or of a material of permanent corner shape, whereby the exposure takes place from the outside, substantially in a diagonal direction through the contact face.

The aforementioned requirements are also satisfied by the art defined in the independent claims 9 and 11.

According to the invention, joints are obtained in a way which is both simple and reliable. The joints have strength, reliability, appearance and shape far superior to other types of joints. As the part of exposure in the contact face is surrounded by a combined support and fixing part wherein no exposure to IR light takes place, it is ensured that during the process of joining together the thermoplastic material maintains its thickness in the joint in spite of the fact that during the phase of exposure the thermoplastic material is converted to molten state in the portions that are exposed.

Further embodiments of the invention are disclosed in the dependent claims.

In the following, the invention will be described in more detail with reference to the accompanying drawing, wherein
- Fig. 1: is a perspective view of an exemplifying embodiment of a tool to be used in accordance with the invention,
- Fig. 2: shows an example of the joining together of two thermoplastic films in accordance with the invention,
- Fig. 3: is a schematical perspective view of the joining of a corner in accordance with the invention,
- Fig. 4: shows the same as seen from above, and
- Fig. 5: shows another example of the joining of a corner, seen from above.

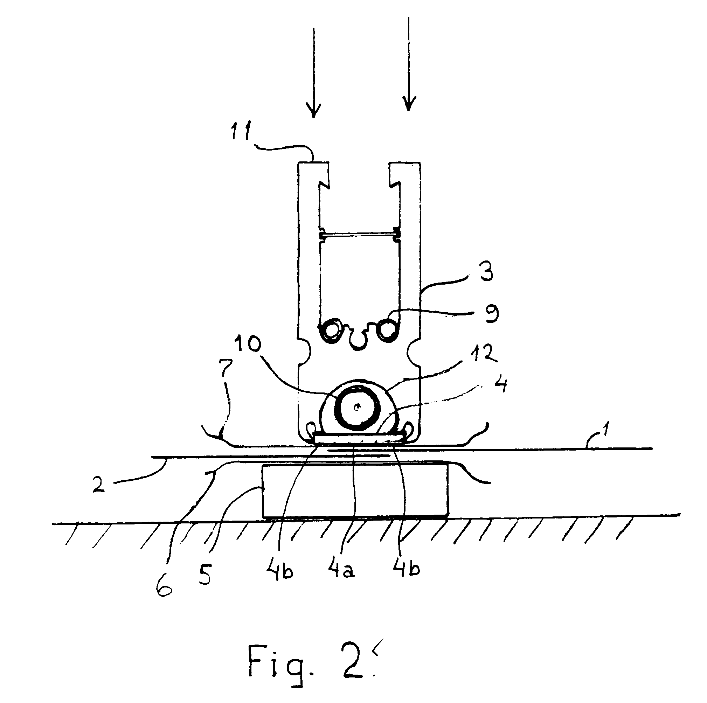

In joining together thermoplastic materials 1, 2, such as polyethylene, PVC, polystyrene, polypropylene, and coextruded or glued laminates of varying thicknesses, from the thinnest films of about 0.005 mm to thick board materials of more than 16 mm, the thermoplastic materials 1, 2 to be joined together are pressed against one another by means of a transparent contact face 4 of a tool 3 and exposed through the contact face 4 to IR light until at least the pre-melting temperature of the thermoplastic materials 1, 2 is reached in the area of the joint, whereby the area 4a of the contact face 4 through which the exposure takes place is arranged to shape the face of the joint both during the exposure and after the subsequent cooling, whereas the surrounding parts of the contact face 4 constitute a combined support and fixing part 4b for the area 4a and for the thermoplastic materials 1, 2. The number of the thermoplastic materials 1, 2 to be joined together may be two or higher, and they may be arranged either so that they overlap each other in the joint, as comes out from Fig. 2, or so that they are joined end against end (butt weld). Depending on the thermoplastic material concerned and on its thickness, the time of exposure may vary from about 0.1 second up to several minutes. As the thermoplastic materials placed under the lateral areas 4b of the contact face are not exposed, these constitute an excellent support for the tool 3 during the working phase in which the plastic material is in molten state, and thereby ensure that the thickness of the thermoplastic materials in the joint area itself remains unchanged. At the exposure, preferably a somewhat elastic counter-piece 5 is used, preferably provided with a heat-resistant face, against which the thermoplastic materials 1, 2 are pressed by means of the contact face 4 of the tool.

If the thermoplastic material or materials 1, 2 is/are fully transparent and colourless, the IR light passes through without heating them. The same is, of course, true regarding the transparent contact face 4. In order that heating of the thermoplastic materials should then take place, it is possible either to use an IR-light-absorbing, preferably black counter-piece 5 or to place an IR-light-absorbing insulation layer, e.g. a black teflon tape 6, on the counter-piece, whereby the counter-piece 5 or the insulation layer 6 is heated and, in its turn, heats the thermoplastic materials 1, 2. If it is desirable to distribute the heating so that part of the heat comes from the top side and part of it from the bottom side, on the counter-piece 5, underneath the thermoplastic material 2, it is possible to place a black teflon tape 6, and above the thermoplastic material 1 a teflon tape 7 which is partly transparent but has a certain ability to absorb IR light.

Another possibility in the joining together of transparent or white films is to place a narrow IR-light-absorbing strip of thermoplastic film either between or at one side of the thermoplastic materials along the line at which the joint is to be formed. Thereby the black strip is heated, and together with it also the surrounding transparent, colourless or white plastic materials 1, 2, to the desired pre-melting temperature, whereby a joining together takes place between all of the thermoplastic materials in the area of exposure. Thus, the joint formed also includes the IR-light-absorbing thermoplastic strip.

When transparent films 1, 2 are being joined together, it is possible to obtain the desired shape and extension of the joint if a counter-piece 5 is used which is transparent or provided with a mirror face and if an IR-light-absorbing, preferably black strip of heat-resistant material is placed in the desired location underneath the thermoplastic materials, which said strip has the shape that is desired for the joint. During exposure, only the strip is heated and, by its effect, only the portions of the thermoplastic materials that are in contact with the strip, for which reason the strip determines the contours of the joint.

If it is desirable to obtain a joint that can be opened without the plastic material itself being torn to pieces, i.e. in the case of various consumer packages, extremely short times of exposure must be used.

When goods are wrapped, the method in accordance with the present invention can be employed as replacement for packaging by means of shrink film, with remarkable economies of energy as a result. The thermoplastic film is first tightened around the goods or object to be wrapped with the aid of a suitable tightening means, either so that both ends of the film passed around the goods are pulled through glide discharge devices to a projecting crank between the contact face 4 of the exposure tool 3 and the counter-piece 5, or so that, before tightening, one end of the film is fixed to the object in a suitable way, whereby the tightening takes place as parallel to one of the sides of the object, which said side, in this case, acts as the counter-piece. When the exposure tool is thereupon pressed against the counter-piece or against the side of the object, respectively, the film is kept fixed in the tightened state during the exposure and cooling, so that an extremely strong and solid package is obtained. When the exposure does not take place right up to the edges of the contact face, a secure fixing of the film is obtained during exposure and cooling, in spite of the fact that in the exposure area itself the thermoplastic material is converted to molten or almost molten state.

Depending on the ratio between the joint length and the tool length, the joining together may take place as one step, stepwise, or continuously.

In joining together coextruded or laminated films with, e.g., colourless layers at one side and with an IR-light-absorbing, e.g. black, layer at the other side, the joining together can take place advantageously so that the IR-light-absorbing sides are turned against one another and the exposure takes place from one side through the transparent layer or layers, which remains/remain unaffected by the heating at the same time as the joining together of the IR-light-absorbing layers takes place. The best result is obtained if the melting temperature of the transparent layers is higher than that of the IR-light-absorbing layers, whereby the joint becomes substantially unnoticeable from outside.

In the case of overlapping joining between a transparent film and a strongly coloured film, the best results are obtained if the exposure takes place from the side of the transparent film.

In the case of continuous joining together, the tool is moved under application of a pressure to the thermoplastic materials along the line in which the joint is supposed to be formed. If the tool is of an oblong type, by means of this method it is also possible to achieve lamination of two or possibly even more thermoplastic materials by moving the tool in its transverse direction across the plastic materials.

In joining together of thick board materials of strongly coloured thermoplastic, an excellent joint end against end is obtained if both of the joint faces are chamfered so that a V-shaped groove is formed between the two boards and a transparent V-section thermoplastic material is placed in the groove, whereby the exposure of the slanting faces of the two board materials takes place through the transparent additional material.

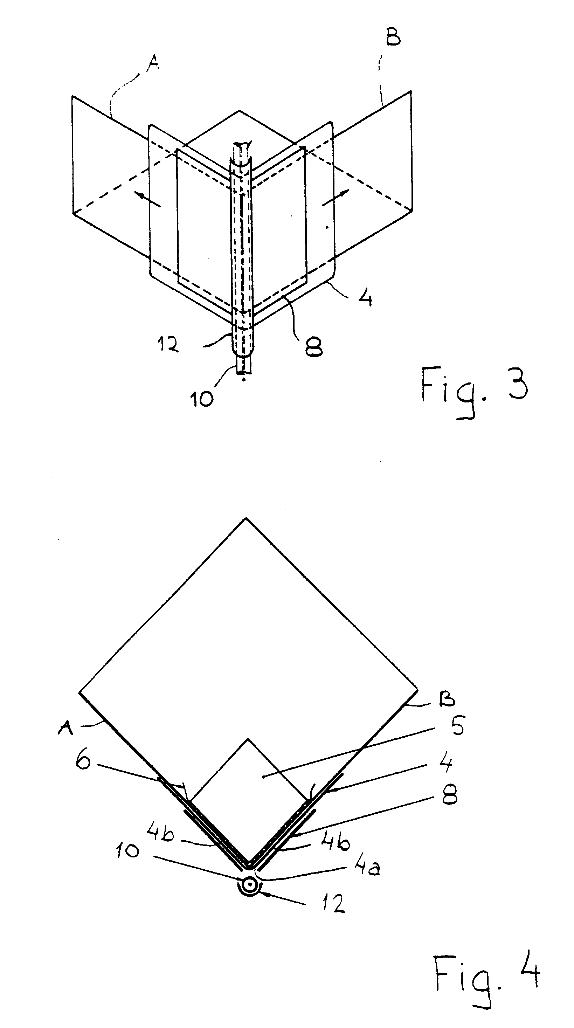

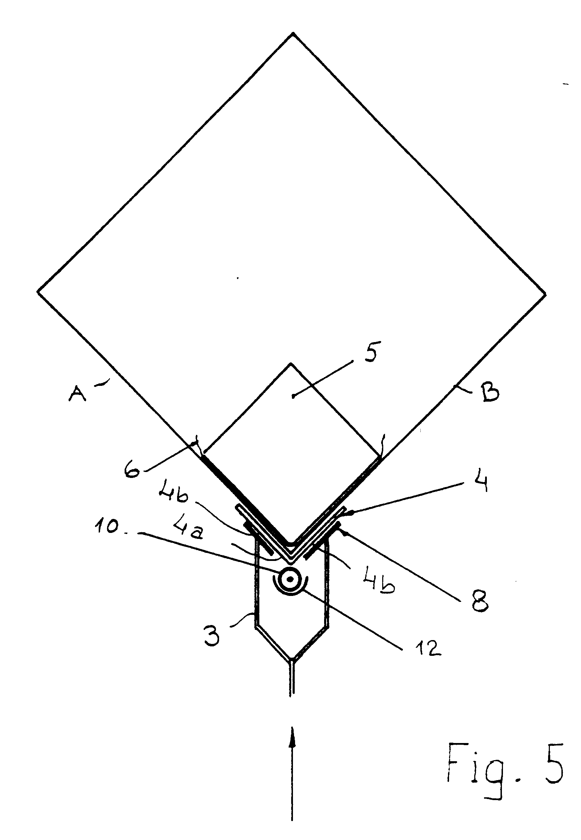

In joining a thermoplastic material, such as polypropylene, to a box-shaped construction it is possible to do, e.g., so that the sides A and B of a ready-cut box blank are folded up into contact with a counter-piece 5 that has the shape of a corner, said counter-piece 5 being appropriately provided with a dark teflon insulation 6, whereupon the edges of the side walls A, B are kept pressed against one another, supported by the counter-piece 5, by means of the contact face 4 of the tool, whereupon the exposure of the joint portion to IR light takes place from outside, substantially in the diagonal direction. In order to limit the area that is to be exposed, it is possible to use some sort of shields or templets 8. As the contact face 4, it is possible to use, e.g., a flexible teflon tape or silicone rubber cloth, which is, at the exposure and cooling phase, tightened against the corner by means of forces acting in the directions of the side walls A, B, as comes out from Fig. 3. Another possibility is to press an angular face of a transparent solid material, such as glass, against the corner portion in diagonal direction, as comes out from Fig. 5.

In particular in the case of continuous joining, but also in the case of stepwise joining if long exposure times are employed, a need arises to have more efficient cooling both of the tools and of the thermoplastic materials, in particular if a more rapid working cycle is desired. The cooling can be achieved in a simple way by means of a cooling medium in the form of a gas or liquid, said medium being passed through cooling ducts 9 formed for the purpose into the tool 3.

Cooling can also be arranged so that, when full exposure time is reached, the cooling medium is pressed in between the contact face 4 of the tool and the thermoplastic film 1, e.g., in a transparent flexible hose, which is applied across the contact face 4 and is completely flattened during the exposure, but into which an increased inner pressure is introduced at the beginning of the cooling phase. Moreover, if the cooling medium is coloured, by means of this procedure, at the same time, a shutter is obtained which prevents radiation from the as yet glowing source 10 of IR radiation from penetrating up to the thermoplastic material, which accelerates the cooling further.

By means of the method in accordance with the invention, an arbitrary number of thermoplastic films can be joined together, whereby the joint that is formed has a throughout excellent quality irrespective of the number of films.

A further mode of obtaining the desired contours of the joint is to place a templet between the tool and the thermoplastic film, said templet having a slot or opening of desired shape and dimension, whereby the exposure takes-place exclusively through said slot or opening. The opening may be shaped, e.g., as a text or some other information.

In view of fine adjustment of the tool so that the best possible result should be obtained for the thermoplastic material that is to be joined in the particular case, it is possible to vary the wavelength of the IR light.

The method may also be used in the filing of documents or equivalent, in which case a text or a figure, such as a coat-of-arms or a seal, is printed in the joint, having been engraved in the area of exposure 4a of the contact face 4 of the tool. Another possibility is to bake a band with a text or figure into the joint.

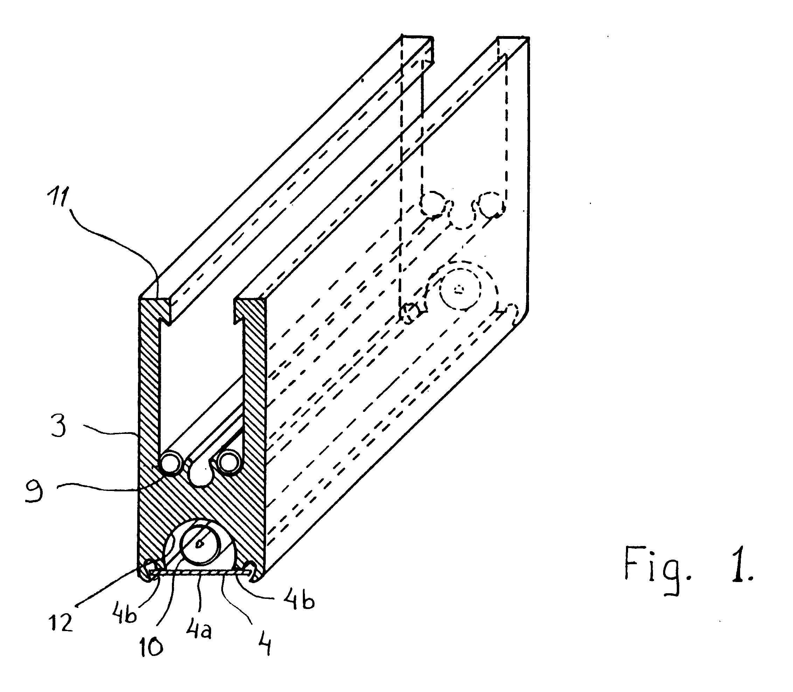

As comes out from the above, the device in accordance with the invention comprises a transparent contact face 4 and a counter-piece 5 jointly operative with the contact face for fixing of the thermoplastic materials 1, 2, as well as a source 10 of IR light for exposure of the thermoplastic materials 1, 2 through the contact face 4. The contact face 4 is provided with a central exposure portion 4a and with a shielded support and fixing portion 4b which surrounds the exposure portion. The device may be designed as a hand tool 3, in which case it is provided with an operating handle at its side directed away from the contact face 4, or as a tool 3 fitted in a welding or joining machine, in which case its "back side" is appropriately provided with a fixing rail 11 of the dovetail type. The source 10 of IR light may be spherical, tubular, or possibly only consist of a filament which is capable of emitting IR light. In the latter two cases the frame of the tool 3 appropriately consists of an aluminium profile, e.g. in accordance with Figures 1 and 2. In order to avoid adhering of molten thermoplastic material to the contact face 4, the latter is appropriately coated with silicone or teflon.

In view of intensifying the IR-light radiation, the source 10 of IR light may be appropriately provided with a separate or integrated reflector 12. Further intensification is obtained if the hood of the source 10 of IR light or the exposure portion 4a of the contact face 4 is shaped as focusing.

The contact face 4 of the tool may consist of a plane, preferably heat-resistant glass plate, of a glass prism with a considerably larger dimension in the direction of the beam than in its cross direction as well as with a trapezoidal or rectangular section, of a silicone rubber body of corresponding format, of a flexible, transparent heat-resistant film or a transparent solid body with a shape suitable for some particular purpose, such as a glass body bent at an angle, e.g. as is shown in Fig. 5. The prismatic form mentioned above is applied, e.g., when joining takes place in an extremely limited space.

For the purpose of cooling, the tool may be provided with cooling ducts 9, e.g., inside the body of the tool, or it may be provided with a flexible hose applied across the contact face 4, the circumference of said hose being considerably larger than the twofold width of the contact face 4. Hereby a part of the hose projects out to the side of the tool, which said part can contain cooling medium during the exposure phase and from which said part the cooling medium can be pressed during the subsequent cooling phase in a simple way into the space between the contact face 4 and the thermoplastic film 1 without affecting the pressure against the thermoplastic film.

In view of accelerating the working cycle, the tool may be appropriately provided with a mechanical shade or shutter which is arranged to close the exposure opening immediately after the preset exposure time has elapsed.

As a rule, the best distribution of pressure is obtained across the joint if the counter-piece 5 consists of a plane, somewhat elastic cushion, but in certain cases a completely hard counter-piece may be preferable.

If it is desirable to obtain a distribution of the heating so that it takes place partly from the top side of the films and partly from the bottom side, next to the contact face 4 it is possible to choose a teflon tape 7 with a desired degree of IR-light absorption capacity.

By applying the reflector 12 directly onto the glass hood of the source 10 of IR light, at the same time as the hood is rotatable in the axial direction in the frame of the tool 3, a possibility of simple regulation of the intensity of the exposure is obtained. At the same time, an efficient shutter is obtained when the source of light is rotated so that the part of the glass hood on which the reflector face 10 is fitted is turned towards the contact face 4.

In order to obtain a flexible contact face 4, the tubular source 10 of IR light may be possibly fixed to the inside of a transparent flexible silicone hose, which can be pressure-loaded during exposure and cooling as necessary.

The tool may also be provided with two or more contact faces so that several joints can be prepared at the same time. In such a case, the contact faces 4 may be placed at adjoining sides or at opposite sides of the tool 3.

In the case of continuous joining together, it may be advantageous to have a contact face in the form of an endless band of transparent teflon tape which is freely rotatable around guide rolls fitted at the end portions of the tool. In the case of continuous joining together, a spherical source of IR light may be preferable in certain cases.

The most advantageous mode of producing a continuous joint along an arbitrary path in accordance with the present invention is to press the thermoplastic materials to be joined together in the desired position between a counter-piece and a large stationary contact face so that the thermoplastic materials are pressed together over the entire area where the joint is to be produced, together with the adjoining portions at both sides of the joint, and to pass the source of IR light together with the related reflectors, which are arranged both to concentrate and to shield the beams of IR light so that the exposure takes place only at a point or along a line of a width corresponding to the width of the desired joint, which said source of IR light is arranged to be passed along an arbitrary path at a predetermined distance from the contact face. If a large series of joints with the same shape are to be produced, the source of IR light and the related reflectors may be arranged displaceable along a guide of the same shape as the shape of the desired joint.

True enough, the tool may also be provided with several sources of IR light focused to the same point, or several tools 3 may be connected as a panel, in which case further cooling ducts may be provided between the tools, as is implied in the section shown in Fig. 2.

## Claims

1. Method for joining together thermoplastic materials (1,2) in connection with wrapping by keeping these fixed against one another between a transparent contact face (4) and a counter-piece (5) and by simultaneuosly exposing the thermoplastic materials (1,2) through the contact face (4) to IR light until at least the premelting temperature of the termoplastic materials is reached in the area of the joint, which exposing takes place only through a limited area (4a) of the contact face (4), which said area (4a) is arranged to shape the face of the joint both during the exposure and during the subsequent cooling, **characterized** in that a film-shaped thermoplastic material is tightened around an object to be wrapped and kept fixed during exposure and cooling by means of a shielded support and fixing portion (4b) of the contact face (4) of a tool (3), which portion (4b) surrounds the exposure area (4a).

2. Method as claimed in claim 1, **characterized** in that the ends of the thermoplastic material are pulled through glide discharge devices to a projecting crank between the contact face (4) of the tool (3) and the counter-piece (5) before exposing.

3. Method as claimed in claim 1, **characterized** in that one end of the thermopalstic material is fixed to the object before tightening and when tightened the contact face (4) is pressed against such a part of the thermoplastic material where the thermoplastic material layers overlap each other using the object itself as a counter-piece (5).

4. Method as claimed in any of claims 1 to 3, **characterized** in that the cooling of the thermoplastic materials after exposure is carried out with a preferably coloured cooling medium pressed into a transparent flexible hose fitted between the contact face (4) and the topmost thermoplastic material.

5. Method as claimed in any of the preceding claims, **characterized** in that between the contact face (4) and the thermoplastic material (1), a templet is placed being provided with an opening of desired shape and dimension.

6. Method as claimed in claim 5, **characterized** in that the opening is shaped as a text or other information.

7. Method as claimed in any of the claims 1 to 6, **characterized** in that into the joint a text or a figure is printed, which is engraved in the exposure portion (4a) of the contact face (4).

8. Method for joining together thermoplastic materials (1,2) by keeping these fixed against one another between a transparent contact face (4) and a counter-piece (5) and by simultaneuosly exposing the thermoplastic materials (1,2) through the contact face (4) to IR light until at least the premelting temperature of the termoplastic materials is reached in the area of the joint, which exposing takes place only through a limited area (4a) of the contact face (4), which said area (4a) is arranged to shape the face of the joint both during the exposure and during the subsequent cooling, **characterized** in that in joining of a thermoplastic ready-cut box blank to a box-shaped construction, the side walls (A,B) of the box are folded up into contact with the counter-piece (5) having the shape of a corner, two opposite edges of the side walls (A,B) are pressed against one another under support of the counter-piece (5) by means of the contact face (4) being of a flexible material or a material of permanent corner shape, whereby the exposure takes place from the outside, substantially in a diagonal direction through the contact face (4).

9. Device for joining together thermoplastic materials, comprising a source (10) of IR light for exposure of the thermoplastic materials (1,2) through a transparent contact face (4) and comprising a counterpiece (5) jointly operative with the contact face for fixing of the thermoplastic materials (1,2), the contact face (4) having an exposure portion (4a) and a support and fixing portion (4b) surrounding the exposure portion (4a), **characterized** in that the contact face (4) consists of a glass prism of trapezoidal or rectangular section, whose dimension in the direction of the beam is considerably larger than its dimension in the transverse direction of prism, and that the support and fixing portion (4b) forms a portion shielded from exposure of IR light.

10. Device as claimed in claim 9, **characterized** in that a reflector (12) is applied directly onto the tubular source (10) of IR light said source (10) being fitted axially rotatably in a tool (9).

11. Device for joining together thermoplastic materials, comprising a source (10) of IR light for exposure of the a thermoplastic materials (1,2) through a transparent contact face (4) and comprising a counterpiece (5) jointly operative with the contact face for fixing of the thermoplastic materials (1,2), the contact face (4) having an exposure portion (4a) and a support fixing portion (4b) surrounding the exposure portion, **characterized** in that a transparent and flexible hose is fixed across the contact face (4) and has a circumference being considerably larger than the twofold width of the contact face (4), and that the support and fixing position (4b) forms a portion shielded from exposure of IR light.

## Patentansprüche

1. Verfahren zum Verbinden thermoplastischer Materialien (1, 2) im Zusammenhang mit Umwicklungstechnik durch fixiertes Zusammenhalten dieser Materialien zwischen einer durchsichtigen Berührungsfläche (4) und einem Gegenstück (5), und durch gleichzeitiges Belichten der thermoplastischen Materialien (1, 2) mit IR-Licht durch die Berührungsfläche (4), bis mindestens die Vorschmelztemperatur der thermoplastischen Materialien im Gebiet der Verbindung erreicht wird, deren Belichtung lediglich in einem begrenzten Gebiet (4a) der Berührungsfläche (4) erfolgt, wobei das genannte Gebiet (4a) so angeordnet ist, dass die Oberfläche der Verbindung sowohl während der Belichtung als auch während der nachfolgenden Abkühlung geformt wird, dadurch gekennzeichnet, dass ein folienförmiges thermoplastisches Material um einen zu umwickelnden Gegenstand gespannt und während der Belichtung und Abkühlung festgehalten wird, dies mithilfe eines abgeschirmten Trag- und Befestigungsabschnittes (4b) der Berührungsfläche (4) eines Werkzeuges (3), wobei der Abschnitt (4b) das Belichtungsgebiet (4a) umgibt.

2. Verfahren nach Anspruch 1, dadurch gekennzeichnet, dass die Enden des thermoplastischen Materials vor der Belichtung durch Rutsch-Entlade-Vorrichtungen zu einer vorspringenden Auskröpfung zwischen der Berührungsfläche (4) des Werkzeuges (3) und dem Gegenstück (5) gezogen werden.

3. Verfahren nach Anspruch 1, dadurch gekennzeichnet, dass ein Ende des thermoplastischen Materials vor dem Umspannen am Gegenstand befestigt wird und nach dem Umspannen die Berührungsfläche (4) gegen eine solchen Teil des thermoplastischen Materials gedrückt wird, wo die thermoplastischen Material-Schichten sich gegenseitig überlappen, wobei der Gegenstand selber als Gegenstück (5) verwendet wird.

4. Verfahren nach einem der Ansprüche 1 bis 3, dadurch gekennzeichnet, dass die Abkühlung der thermoplastischen Materialien nach der Belichtung mit einem vorzugsweise gefärbten Kühlmittel vorgenommen wird, das in einen transparenten, flexiblen Schlauch gepresst wird, der zwischen der Berührungsfläche (4) und dem zuoberstliegenden thermoplastischen Material angebracht ist.

5. Verfahren nach einem der vorstehenden Ansprüche, dadurch gekennzeichnet, dass zwischen der Berührungsfläche (4) und dem thermoplastischen Material (1) eine Schablone mit einer Öffnung von gewünschter Form und Abmessung angeordnet wird.

6. Verfahren nach Anspruch 5, dadurch gekennzeichnet, dass die Öffnung die Form eines Textes oder anderer Information aufweist.

7. Verfahren nach einem der Ansprüche 1 bis 6, dadurch gekennzeichnet, dass in die Verbindung ein Text oder eine Figur eingedruckt wird, welche/r in den Belichtungsabschnitt (4a) der Berührungsfläche (4) eingraviert ist.

8. Verfahren zum Verbinden thermoplastischer Materialien (1, 2) durch fixiertes Zusammenhalten dieser Materialien zwischen einer durchsichtigen Berührungsfläche (4) und einem Gegenstück (5), und durch gleichzeitiges Belichten der thermoplastischen Materialien (1, 2) mit IR-Licht durch die Berührungsfläche (4), bis mindestens die Vorschmelztemperatur der thermoplastischen Materialien im Gebiet der Verbindung erreicht wird, deren Belichtung lediglich in einem begrenzten Gebiet (4a) der Berührungsfläche (4) erfolgt, wobei das genannte Gebiet (4a) so angeordnet ist, dass die Oberfläche der Verbindung sowohl während der Belichtung als auch während der nachfolgenden Abkühlung geformt wird, dadurch gekennzeichnet, dass beim Verbinden eines thermoplastischen Fertigzuschnitt-Schachtelrohlinges zu einer schachtelförmigen Konstruktion Seitenwände (A, B) der Schachtel nach oben gefaltet werden bis zur Berührung mit dem Gegenstück (5), das die Form einer Ecke aufweist, dass zwei gegenüberliegende Ränder der Seitenwände (A, B) gegeneinander gedrückt werden durch Unterlegen des Gegenstückes (5) und mithilfe der Berührungsfläche (4), die aus einem flexiblen Material oder aus einem Material mit dauernder Eckform besteht, wobei die Belichtung von der Aussenseite her erfolgt, im wesentlichen in diagonaler Richtung durch die Berührungsfläche (4) hindurch.

9. Anordnung zum Verbinden thermoplastischer Materialien, bestehend aus einer Quelle (10) mit IR-Licht für die Belichtung der thermoplastischen Materialien (1, 2) durch eine transparente Berührungsfläche (4) und bestehend aus einem Gegenstück (5), das mit der Berührungsfläche für die Befestigung der thermoplastischen Materialien (1, 2) zusammenwirkt, wobei die Berührungsfläche (4) einen Belichtungsabschnitt (4a) und einen Trag- und Befestigungsabschnitt (4b), der den Belichtungsabschnitt (4a) umgibt, aufweist, dadurch gekennzeichnet, dass die Berührungsfläche (4) aus einem Glasprisma mit trapez- oder rechteckförmigem Querschnitt besteht, dessen Abmessung in der Strahlrichtung bedeutend grösser als die Abmessung in der Querrichtung des Prismas ist, und dass der Trag- und Befestigungsabschnitt (4b) einen Abschnitt bildet, der von einer Belichtung durch IR-Licht abgeschirmt ist.

10. Anordnung nach Anspruch 9, dadurch gekennzeichnet, dass ein Reflektor (12) direkt auf der rohrförmigen Quelle (10) mit IR-Licht angebracht ist, wobei die genannte Quelle (10) axial drehbar in einem Werkzeug (9) angebracht ist.

11. Anordnung zum Verbinden thermoplastischer Materialien, bestehend aus einer Quelle (10) mit IR-Licht für die Belichtung der thermoplastischen Materialien (1, 2) durch eine transparente Berührungsfläche (4) und bestehend aus einem Gegenstück (5), das mit der Berührungsfläche für die Befestigung der thermoplastischen Materialien (1, 2) zusammenwirkt, wobei die Berührungsfläche (4) einen Belichtungsabschnitt (4a) und einen Trag- und Befestigungsabschnitt (4b), der den Belichtungsabschnitt (4a) umgibt, aufweist, dadurch gekennzeichnet, dass ein durchsichtiger und flexibler Schlauch gegenüber der Berührungsfläche (4) befestigt ist und einen Umfang aufweist, der bedeutend grösser als die zweifache Breite der Berührungsfläche (4) ist, und dass der Trag- und Befestigungsabschnitt (4b) einen Abschnitt bildet, der von einer Belichtung durch IR-Licht abgeschirmt ist.

## Revendications

1. Procédé d'assemblage de matériaux thermoplastiques (1,2) destinés à l'emballage par fixation l'un contre l'autre d'une face de contact transparente (4) et une contre-face (5) et par exposition simultanée au travers de la pièce transparente (4) des matériaux thermoplastiques (1,2) aux rayons infrarouges jusqu'à atteindre au moins la température de pré-fonte des matériaux thermoplastiques dans la zone d'assemblage, cette exposition ne se faisant qu'au travers d'une zone limitée (4a) de la face de contact (4), ladite zone (4a) étant disposée de manière à modeler la forme de l'assemblage à la fois durant l'exposition et durant le refroidissement subséquent,
caractérisé en ce qu'un matériau pelliculaire thermoplastique est tendu autour d'un objet à emballer et maintenu fixé durant l'exposition et le refroidissement au moyen d'une support protecteur et de la partie fixante (4b) de la face de contact (4) d'un outil (3), laquelle partie (4b) entoure la zone d'exposition (4a).

2. Procédé selon la revendication 1, caractérisé en ce que les extrémités du matériau thermoplastique sont tirées, avant exposition, au travers d'un dispositif en glissière, vers un coude saillant entre la face de contact (4) de l'outil (3) et la contre-pièce (5).

3. Procédé selon la revendication 1, caractérisé en ce qu'une extrémité du matériau thermoplastique est fixée à l'objet avant fixation et, cette fixation étant réalisée, la face de contact (4) est pressée contre la partie du matériau thermoplastique où les couches du matériau thermoplastique se recouvrent l'une l'autre, l'objet tenant lieu de contre-pièce (5).

4. Procédé selon les revendications 1 à 3, caractérisé en ce que le refroidissement du matériau thermoplastique après exposition est effectué avec un agent refroidisseur de préférence coloré pressé dans un boyau transparent souple, ajusté entre la pièce de contact (4) et le matériau thermoplastique supérieur.

5. Procédé selon les revendications précédentes, caractérisé en ce qu'un gabarit, ayant l'ouverture de la forme et de la dimension désirées, est placé entre la pièce de contact (4) et le matériau thermoplastique.

6. Procédé selon la revendication 5, caractérisé en ce que l'ouverture est façonnée sous forme de texte ou de toute autre information.

7. Procédé selon les revendications 1 à 6, caractérisé en ce qu'un texte ou un dessin est imprimé dans l'assemblage, ledit texte ou dessin étant gravé dans la partie mise en exposition (4a) de la face de contact (4).

8. Procédé d'assemblage de matériaux thermoplastiques (1,2) par maintien de ceux-ci fixés l'un contre l'autre entre une pièce de contact transparente (4) et une contre-pièce (5) et par exposition simultanée des matériaux thermoplastiques (1, 2) au travers de la pièce de contact (4) à des rayons infrarouges, jusqu'à atteindre au moins la température de pré-fonte des matériaux thermoplastiques dans la zone d'assemblage, cette exposition s'effectuant seulement au travers d'une zone limitée (4a) de la pièce decontact, ladite zone limitée (4a) étant disposée de manière à couvrir la partie d'assemblage à la fois durant l'exposition et durant le refroidissement subséquent,
caractérisé en ce que, en assemblant une ébauche de boîte prédécoupée en matière thermoplastique à un dispositif d'emboîtage, les parois latérales (A, B) de la boite sont pliées au contact de la contre-pièce (5) ayant la forme d'un angle, deux bords opposés des parois latérales (A,B) sont pressés l'un contre l'autre avec le support de la contre-pièce (5) au moyen d'une pièce de contact (4) en matériau souple ou en matériau de forme angulaire permanente, l'exposition s'effectuant alors à partir de l'extérieur, essentiellement en diagonale, au travers de la face de contact (4).

9. Dispositif pour l'assemblage de matériaux thermoplastiques, comprenant une source (10) de rayonnement infrarouge en vue de l'exposition des matériaux thermoplastiques (1,2) au travers d'une face de contact transparente (4) et comprenant une contre-pièce (5) en coopération avec la face de contact, pour la fixation des matériaux thermoplastiques (1,2) la face de contact comprenant une partie destinée à l'exposition (4a) et une partie destinée au support et à la fixation (4b) entourant la partie destinée & l'exposition (4a),
caractérisé en ce que la face de contact (4) consiste en un prisme de verre, de coupe trapézoïdale ou rectangulaire, dont la dimension en direction du faisceau de rayonnement est considérablement plus grande que sa dimension dans le sens transversal du prisme, et en ce que la partie destinée au support et à la fixation (4b) est soustraite à l'exposition au rayonnement infrarouge.

10. Dispositif selon la revendication 9, caractérisé en ce qu'un réflecteur (12) est appliqué directement sur la source tubulaire (10) de rayonnement infrarouge, ladite source (10) étant installée mobile en rotation axiale dans un outil (9) .

11. Dispositif pour l'assemblage de matériaux thermoplastiques, comprenant une source (10) de rayonnement infrarouge en vue de l'exposition des matériaux thermoplastiques (1,2) au travers d'une face de contact transparente (4) et comprenant une contre-pièce (5) en coopération avec la face de contact pour la fixation des matériaux thermoplastiques (1,2), la face de contact comprenant une partie destinée à l'exposition (4a) et une partie destinée au support et à la fixation (4b) entourant la partie destinée à l'exposition (4a),
caractérisé en ce qu'un tuba transparent et flexible est fixé transversalement sur la face de contact (4) et présente une circonférence qui est sensiblement plus large que le double de la largeur de la face de contact (4), et en ce que la portion de support et de fixation (4b) forme une portion protégée vis à vis du rayonnement infrarouge.
